Europäisches Patentamt

European Patent Office

Office européen des brevets

(11) Veröffentlichungsnummer: **0 453 713 B1**

(12) **EUROPÄISCHE PATENTSCHRIFT**

(45) Veröffentlichungstag der Patentschrift: **07.12.94**

(21) Anmeldenummer: **91101357.1**

(22) Anmeldetag: **01.02.91**

(51) Int. Cl.⁵: **B63H 9/06**

(54) **Veränderbares Tragflächenprofil.**

(30) Priorität: **01.02.90 DE 4002972**

(43) Veröffentlichungstag der Anmeldung:
**30.10.91 Patentblatt 91/44**

(45) Bekanntmachung des Hinweises auf die
Patenterteilung:
**07.12.94 Patentblatt 94/49**

(84) Benannte Vertragsstaaten:
**CH FR GB IT LI NL**

(56) Entgegenhaltungen:
**EP-A- 0 219 690**
**DE-A- 1 506 317**
**US-A- 2 650 047**

**U.S. DEPARTMENT OF THE AIR FORCE (A.F.
WRIGHT AERONAUTICAL LABORATORIES)
13 Februar 1980, WRIGHT-PATTERSON A.F.B.
(OHIO, U.S.A.) Seite 1 (ABSTRACT OF NEW
TECHNOLOGY. "CONTINUOUS SKIN, VARI-
ABLE CAMBER LEADING OR TRAILING EDGE
LINKAGE MECHANISM".)"**

(73) Patentinhaber: **Waldherr, Günter**
**Gartenstrasse 3**
**D-94136 Thyrnau (DE)**

(72) Erfinder: **Waldherr, Günter**
**Gartenstrasse 3**
**D-94136 Thyrnau (DE)**

(74) Vertreter: **Alber, Norbert et al**
**Patent- und Rechtsanwälte**
**Hansmann Vogeser Dr. Boecker Alber Dr.
Strych**
**Albert-Rosshaupter-Strasse 65**
**D-81369 München (DE)**

**Beschreibung**

Die Erfindung betrifft ein veränderbares Tragflächen-Profil, das in bekannter Art und Weise aufgrund seiner Profilierung eine Saug- sowie eine Druckseite aufweist und deshalb sowohl zum Vortrieb eines Segelfahrzeuges als auch als Tragfläche für ein Flugzeug oder als Rotorblatt für einen Windrotor eingesetzt werden kann.

Diesen Profilformen ist gemeinsam, daß zwischen einer gerundeten Nase und einer meist spitz auslaufenden Hinterkante unterschiedliche Krümmungen eine längere Außenkontur der einen Seite gegenüber der anderen Seite vorhanden sind, so daß es zur Ausbildung einer Druck- und einer Saugseite kommt. Die optimale Profilform muß nicht nur für jeden der oben genannten Anwendungsfälle unterschiedlich bestimmt werden, sondern innerhalb dieses Anwendungsfalles ist für unterschiedliche Bewegungszustände, Belastungen, Windrichtungen etc. wiederum eine jeweils angepaßte Profilform wünschenswert. Beispielsweise werden bei den Tragflächen eines Flugzeuges Vorflügel, Bremsklappen, Landeklappen etc. in Anpassung an die jeweilige Flugsituation aus dem ursprünglichen Flügelprofil zur Veränderung des Profils ausgefahren.

Die Grundform des Profils, beispielsweise dessen mittlerer Bereich, bleibt jedoch im wesentlichen erhalten. Nur in kleinen Teilbereichen des Profils liegt eine relativ starke Veränderung, was zu unerwünschten Nebenerscheinungen, wie etwa Vorverlagerung des Ablösepunktes und ähnlichem führt.

Wünschenswert wäre deshalb eine graduell geringere, jedoch über einen größeren Bereich des Gesamtprofils vorzunehmende Änderung der Profilform.

Ein Profil mit diesem Zweck ist bereits aus der DE-A-1 506 317 bekannt. Das dort beschriebene Profil besteht aus einem vorderen, einem mittleren und einem hinteren Segment. Das vordere bzw. hintere Segment ist jeweils an einem das Profil tragenden vorderen bzw. hinteren Schwenkachsenholm gelagert. Ein Verbindungsgelenk stellt eine mechanische Verbindung zwischen dem vorderen und dem hinteren Segment her. Das mittlere Segment ist sowohl an das vordere Segment angelenkt als auch über einen in ein X-förmige Steuernut eingreifenden Zapfen mit dem hinteren Segment verbunden. Beim Schwenken des vorderen Segmentes um die vordere Schwenkachse bewegt sich das mittlere Segment relativ und quer zu den Schwenkachsen, um in Zwischenwölbungsstellungen von innen an die flexible Außenhaut anzugreifen und so die Formstabilität der Profilform zwischen den beiden Schwenkachsen zu gewährleisten.

Ein Nachteil dieser Konstruktion besteht darin, daß aufgrund der relativen Beweglichkeit des mittleren Segmentes bezüglich der beiden Schwenkachsen ein erheblicher mechanischer Aufwand getrieben werden muß und somit ein derartiges Profil ein erhebliches Gewicht aufweist und das Risiko von Fehlfunktionen relativ groß ist.

Es ist daher die Aufgabe der Erfindung, ein Profil zu schaffen, dessen Aufbau eine Änderung der Profilform über einen großen Bereich des Gesamtprofils hinweg auch während des Einsatzes erlaubt und mechanisch möglichst einfach ist.

Diese Aufgabe wird durch die kennzeichnenden Merkmale des Anspruchs 1 gelöst.

Die Vorteile dieser Profilveränderungen liegen in einem geringeren Energiebedarf bzw. einer größeren Geschwindigkeit oder auch in einer einfacheren Bedienung des Fahrzeuges, bedingt durch besseres Strömungsverhalten am Flügel.

Ein weiterer Vorteil liegt bei der Verwendung als Tragflügel bei Flugzeugen darin, daß bei einer solchen Bauweise der Tragflügel nach wie vor alle zusätzlichen Aufgaben wie etwa Aufnahme des Fahrwerks, der Kraftstofftanks usw. erfüllen kann.

Bei der Verwendung als Rotor an einem windbetriebenen Generator ist umgekehrt bei gleicher Windgeschwindigkeit eine höhere Drehzahl des Rotors erzielbar.

Das Innere des Flügels besteht im wesentlichen aus einem vorderen, einem mittleren und einem hinteren Segment, die um Achsen senkrecht zur Skelettlinie schwenkbar miteinander verbunden sind. Alle drei Segmente werden von einer Außenhaut umgeben, die aus einem formbeständigen, jedoch flexiblen Material besteht.

Die einzelnen Segmente müssen dabei keineswegs eine Außenkontur besitzen, die gänzlich der Profilform in diesem Bereich entspricht. Vielmehr können die beiden Flächen der Außenhaut auch durch Distanzhalter im jeweils gewünschten Abstand, der sich ja über die Profillänge ändert, zueinander gehalten werden. Wahlweise können diese Distanzhalter an den Segmenten befestigt und mit ihren freien Enden verschiebbar an der Innenseite der Außenhaut festgelegt sein oder eine durchgehende Verbindung von einer Fläche der Außenhaut zur anderen darstellen - wobei die Anlenkpunkte drehbar ausgebildet sein müssen - ohne mit einem der Segmente verbunden zu sein.

Da das möglichst genaue Einhalten einer Profilform besonders im Bereich der Nase des Profils erforderlich ist, wird das vordere Segment vorzusweise wenigstens im Bereich der Nase eine Außenkontur entspre-

2

chend der Nasenform des Gesamtprofils besitzen.

Wahlweise kann dies bei dem gesamten vorderen Segment und bei dem gesamten hinteren Segment der Fall sein, während das mittlere Segment immer einen geringeren Querschnitt besitzen muß als das Flügelprofil in neutraler Mittelstellung in diesem Bereich, da durch Auslenkung des vorderen und/oder hinteren Segmentes im mittleren Bereich des Profils eine Verlagerung eine der beiden Flächen der Außenhaut zur neutralen Mittellinie hin erfolgt.

Dabei können vorderes und hinteres Segment entweder unabhängig voneinander ausgelenkt werden, oder beispielsweise durch Hebel, die sich über die Drehpunkte hinaus jeweils zum mittleren Bereich des mittleren Segmentes hin erstrecken und dort miteinander gekoppelt sind, eine ausschließlich gegensinnige Auslenkung von vorderem und hinterem Segment erzwungen werden.

Die einzelnen Segmente können wahlweise als Kastenholme oder auch in Schalenbauweise ausgeführt werden. Dabei muß nicht nur das mittlere Segment, welches fest beispielsweise am Rumpf des Flugzeuges befestigt ist, eine ausreichende Torsionssteifigkeit besitzen. Bei der Anwendung als Segel eines Bootes muß das mittlere Segment natürlich gegenüber dem Bootskörper drehbar sein um eine Anpassung an die Windrichtung oder Fahrtrichtung zu ermöglichen.

Das Auslenken des beweglichen vorderen und/oder hinteren Segmentes kann wahlweise mechanisch erfolgen, was beispielsweise beim Einsatz auf Segelfahrzeugen sinnvoll sein wird, oder auch hydraulisch, was beim Einsatz in Flugzeugen zu bevorzugen sein wird.

Die Koppelung von vorderem und hinterem Segment, die nur ein gegensinniges Bewegen dieser beiden Segmente zuläßt, wird hauptsächlich beim Einsatz auf Segelfahrzeugen zu bevorzugen sein. Dagegen ist eine unabhängige und damit notfalls auch gleichsinnige Bewegung dieser beiden Segmente notwendig, wenn es um die Verwendung als Flugzeugflügel geht.

Unabhängig davon wird die Außenhaut vorzugsweise im Bereich der Nase, also mit dem vorderen Segment, fest verbunden sein. Dies bedingt, daß durch Auslenkung eines oder auch beider beweglichen Segmente Verschiebungen der Außenhaut entlang der durch Distanzhalter oder auch entsprechende Außenkontur der einzelnen Segmente vorgegebenen Profillinie sowohl im Bereich des mittleren als auch des hinteren Segmentes eintreten, um die angestrebte Verlängerung oder Verkürzung der oberen oder unteren Seite des Gesamtprofils zu erreichen. Diese Verschiebung muß durch Verschiebbarkeit der Außenhaut gegenüber dem mittleren und auch dem hinteren Segment gewährleistet sein. Eine solche Verschiebbarkeit kann beispielsweise dadurch gegeben sein, daß sich die freien Enden der Abstandshalter, die an einem der Segmente befestigt sind, oder auch entsprechend geformte Nutensteine des Elementes selbst in entsprechend geformten Nuten auf der Innenseite der Außenhaut entlanggleiten können, aus der sie aufgrund ihrer Formschlüssigkeit nicht quer zur Verschieberichtung herausbewegt werden können. Im Bereich des hinteren Segmentes, in dem normalerweise bereits eine turbulente Strömung vorliegt und damit eine optimale Profilform nicht mehr unbedingt eingehalten werden muß, kann diese Verschiebbarkeit auch dadurch gewährleistet sein, daß die Außenhaut durch Stege an der Außenfläche des hinteren Segmentes gehalten wird, welche in Strömungsrichtung angeordnet sind und in ihrem hinteren Bereich fest mit dem hinteren Segment verbunden sind und mit ihrem vorderen Bereich in den Bereich der verschiebbaren Außenhaut hineinragen.

Bei dem erfindungsgemäßen Profil bleibt die Profilsehne, also die Verbindungsgerade zwischen den beiden niedrigsten Punkten des Profils, immer parallel zur Längsachse des mittleren Segmentes, wenn bei einer Lösung mit mechanischer Kopplung des vorderen und hinteren Segmentes bestimmte Längenverhältnisse eingehalten werden:

Die Abstände zwischen dem Drehpunkt des vorderen Segmentes und dem Kopplungspunkt sowie dem Drehpunkt des hinteren Segmentes und dem Kopplungspunkt verhalten sich zueinander wie die Abstände zwischen der Nase des Profils und dem Kopplungspunkt einerseits und dem hinteren Ende des Profils und dem Kopplungspunkt andererseits.

Setzt man die Profillänge, ausgehend von der Nase des Profils, mit 100% an, so muß sich der Drehpunkt des vorderen Segmentes vorzugsweise bei etwa 30% der Profillänge, der Koppelungspunkt bei etwa 40% der Profillänge und der Drehpunkt des hinteren Segmentes bei etwa 55% der Profillänge befinden.

Die Profilform, die ja in der neutralen Mittelstellung symmetrisch ist, kann dabei durch die Profildicke über die Profillänge gekennzeichnet werden. Bei Angabe der Profildicke t in Schritten von jeweils 10% der Profillänge c als Eckwerte ist folgende Profilform erprobt:

| Profillänge von c | : | Profildicke t : |
|---|---|---|
| 10% | : | 0,072 x c |
| 20% | : | 0,091 x c |
| 30% | : | 0,099 x c |
| 40% | : | 0,097 x c |
| 50% | : | 0,084 x c |
| 60% | : | 0,069 x c |
| 70% | : | 0,052 x c |
| 80% | : | 0,034 x c |
| 90% | : | 0,018 x c |
| 100% | : | 0 x c |

Der Nasenradius sollte dabei etwa 1% der Profillänge c betragen. Wie die Angaben zur Profilform erkennen lassen, liegt in der Neutralstellung die maximale Profildicke bei etwa 30% der Profillänge. Vorteilhafterweise verlagert sich dieser Punkt der größten Profildicke bei einer Auslenkung des Profiles jedoch in dem Bereich von etwa 40% der Profillänge. Die maximale Profildicke beträgt dabei etwa 9,5% der Profillänge.

Ein solches Profil kann bis zu einer Wölbungshöhe f, also der größten Erhebung der Skelettlinie des Profils über die Skelettsehne, von etwa 10,5 % der Profillänge aus der neutralen Mittellage ausgelenkt werden, was einem Auslenkungswinkel des vorderen bzw. hinteren Segmentes von etwa maximal 20 bzw. 13 Grad für die Praxis entspricht. Bei Abweichung von diesen Werten ergibt sich eine nicht gleichmäßige Krümmung der Außenhaut, im schlimmsten Fall gar ein Knick etc., was nicht nur Materialschäden der Außenhaut, sondern vor allem auch ein ungünstiges Strömungsverhalten am Profil zur Folge hätte.

Beispielhafte Ausführungsformen gemäß der Erfindung sind im folgenden anhand von Abbildungen näher beschrieben. Es zeigen

Abb 1    die prinzipiellen stufenlosen Verstellmöglichkeiten eines vorgegebenen Grundprofils;

Abb. 2    eine Ausführungsform mit Distanzhaltern im mittleren Bereich und mechanisch gekoppeltem vorderen und hinteren Segment;

Abb. 3    eine Ausführungsform mit unabhängig voneinander bewegbarem vorderen und hinteren Segment und profiliertem mittleren Segment und

Abb. 4    eine perspektivische Darstellung eines teilweise freigeschnittenen erfindungsgemäßen Flügels als Segel eines Bootes.

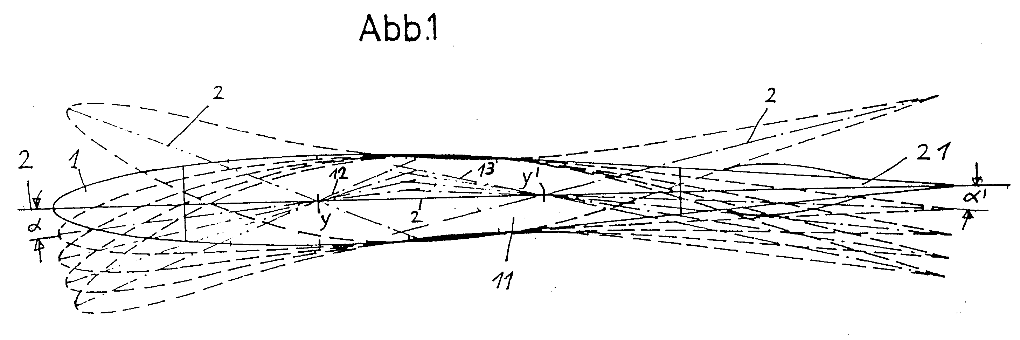

Abb. 1 zeigt mit durchgezogener Linie ein symmetrisches Ausgangsprofil in der Ruhestellung, also mit gerader Skelettlinie 2. Der Flügel ist dabei schematisch durch zwei senkrechte Trennungslinien in ein vorderes Segment 1, ein mittleres Segment 11 und ein hinteres Segment 21 unterteilt.

Die gestrichelten Linien stellen beispielhafte Profilformen dar, die sich durch Verschwenken des vorderen Segmentes 1 und/oder hinteren Segmentes 21 gegenüber dem mittleren Segment 11 um die senkrecht zur Skelettlinie 2 stehenden Achsen Y, Y' ergeben. An den Übergängen zwischen vorderem, mittlerem und hinterem Segment 1, 11, 21 ist das Profil als gerundeter Übergang eingezeichnet, wie er sich bei Verwendung eines formbeständigen, aber ausreichend flexiblem Materials für die Außenhaut ergibt. Je nach deren Auslenkungswinkel α bzw. α' des vorderen bzw. hinteren Segmentes 1 bzw. 21 gegneüber dem mittleren Segment 11 schneiden sich die Mittellinien 12 bzw. 13 des vorderen bzw. hinteren Segmentes 1 bzw. 21 in unterschiedlichen Punkten. Damit wird klar, daß bei mechanischer Koppelung des vorderen Segmentes 1 mit dem hinteren Segment 21 über entsprechende Hebel 14, 15 deren Verbindungspunkt 4 einen Längenausgleich der beiden Hebel 14, 15 relativ zueinander zulassen muß. Dieser Längenausgleich kann statt dessen auch durch Längsverschiebbarkeit einer der Lagerstellen 3,3 realisiert sein.

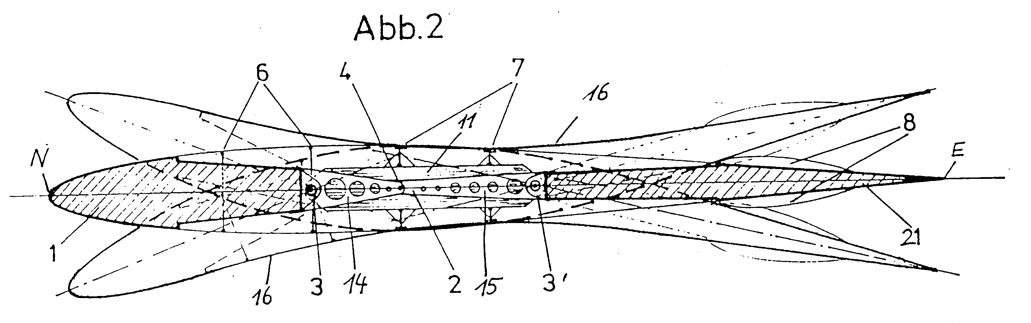

Abb. 2 zeigt einen erfindungsgemäßen Flügel, bei dem der vordere Bereich des vorderen Segmentes 1 sowie der hintere Teil des hinteren Segmentes 11, also besonders die Nase N und das Ende E des Profiles, eine Außenkontur entsprechend der in diesem Bereich gewünschten profilform des Flügels besitzt. Das mittlere Segment 11 reicht dagegen nicht bis zur Innenseite der Außenhaut 16, sondern dient lediglich als Abstandselement und Lagerbock für das schwenkbare vordere und hintere Segment, welches in der Abb. 2 als Lagerstelle 3 eingezeichnet ist. Die richtige Profildicke in diesem mittleren Bereich, also der Abstand der beiden gegenüberliegenden Flächen der Außenhaut 16, wird dadurch eingehalten, daß von dem mittleren Segment 11 Abstandshalter 7 zur Innenseite der Außenhaut ragen und mit dieser verbunden sind. Im Falle der Abb. 2 gehen die Distanzhalter 7 nicht von der einen Fläche zur anderen Fläche der Außenhaut 16 durch, sondern sind jeweils an den Seiten des mittleren Segmentes 21 befestigt. An dem freien Ende, also dem Berührungspunkt mit der Außenhaut 16, müssen die Abstandshalter jedoch verschiebbar mit der Außenhaut 16 verbunden sein, um die bei einer Auslenkung des vorderen Segmentes 1 entstehenden Längsverschiebungen der Flächen der Außenhaut 16 aufnehmen zu können.

Demgegenüber sind im hinteren Bereich des vorderen Segmentes 1 Distanzhalter 6 vorgesehen, die von der einen Fläche der Außenhaut 16 zur anderen Fläche durchgehen, mit dem Segment aber nicht verbunden sind. Diese Distanzhalter sind auf den Innenseiten der Außenhaut 16 drehbar befestigt, da diese Verbindungspunkte bei einer Auslenkung des vorderen Segmentes 1 gegenüber der Außenhaut 16 nicht variieren.

Sowohl das vordere Segment 1 als auch das hintere Segment 21 weisen jeweils einen Fortsatz in Form eines Hebels 14 bzw. 15 in Richtung auf die Mitte des mittleren Segmentes 11 auf. Dort sind diese Hebel 14 und 15 am Verbindungspunkt 4 miteinander gekoppelt, so daß eine seitliche Auslenkung dieses Verbindungspunktes 4 eine gegensinnige Auslenkung von vorderem Segment 1 und hinterem Segment 21 bewirkt, jedoch mit unterschiedlichen Winkelbeträgen, entsprechend dem umgekehrten Verhältnis der Abstände der beiden Drehpunkte 3, 3' zum Verbindungspunkt 4.

Im hinteren Bereich des hinteren Segmentes 21, in dem die Außenkontur des hinteren Segmentes der Profilform des Flügels in diesem Bereich entspricht, ist auf beiden Flächen der Außenhaut 16 die Gleitvorrichtung mit den Stegen 8 angedeutet, welche einerseits die Flächen der Außenhaut 16 in unmittelbarer Anlage an den Außenflächen des hinteren Segmentes 21 hält, andererseits aber einen Parallelversatz der Flächen der Außenhaut 16 gegenüber der Außenfläche des hinteren Segmentes 21 zuläßt. Diese Stege sind mit der hinteren Hälfte fest an der Außenseite des hinteren Segmentes im hinteren Bereich befestigt und bilden zwischen ihrem freien vorderen Ende und dem Segment einen Spalt, in dem die Außenhaut um eine begrenzte Strecke gleiten kann. Dieser Längsversatz ist notwendig, um die durch die Auslenkung des vorderen Segmentes 1 entstehende Verlängerung bzw. Verkürzung einer der beiden Profilseiten zwischen der Nase und dem hinteren Profilende auszugleichen. Der Absatz zwischen der ggfs. vor dem hinteren Ende des hinteren Segmentes 21 endenden Außenhaut 16 und der Außenfläche des hinteren Segmentes 21 muß natürlich so gering ausfallen, daß hierdurch keine starken ungünstigen Strömungsbeeinflussungen entstehen.

Die Auslenkung des Verbindungspunktes 4 aus der Mittenlage kann mechanisch, über einen Hydraulikzylinder oder auch mittels eines Elektromotors geschehen.

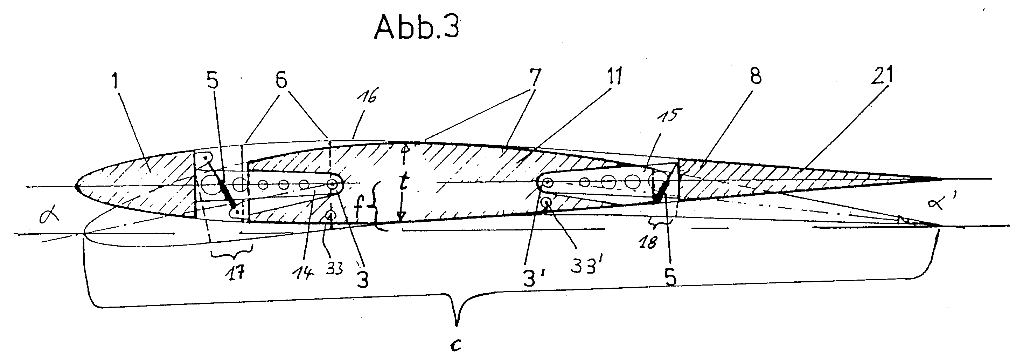

Gegenüber der Ausführungsform der Abb. 2 zeigt Abb. 3 ein mittleres Segment 11, welches zumindest in seinem mittleren Bereich bis zur Innenseite der Flächen der Außenhaut 16 reicht und diese gleitend in Anlage hält, anstelle der Distanzhalter 7 der Abb. 2. Im vorderen und hinteren Bereich des mittleren Segmentes 11 ist dessen Außenkontur selbstverständlich gegenüber der Kontur des Flügelprofiles in diesem Bereich verjüngt. Dieser Abstand wird zur Verlagerung der Flächen der Außenhaut 16 benötigt und ist deshalb nach dem maximalen Auslenkungswinkel $\alpha$ des vorderen Segmentes 1 sowie dem Abstand der Lagerstelle 3 des vorderen Segmentes 1 am mittleren Segment 21 gegenüber der Nase des Profils auszulegen. Entsprechendes gilt für die Verjüngung des mittleren Segmentes 11 im hinteren Bereich, diesesmal abhängig jedoch von dem maximalen Auslenkungwinkel $\alpha'$ des hinteren Segmentes 21 und dem Abstand der hinteren Lagerstelle 3' vom Profilende.

Dabei gilt für die beschriebene Profilform das Strecken-Verhältnis

$$\frac{\overline{(3')\ (4)}}{\overline{(4)\ (3)}} = \frac{\overline{(E)\ (4)}}{\overline{(4)\ (N)}}$$

wobei der Verbindungspunkt 4 etwa bei 40% der Profillänge c liegt und der Abstand zwischen den vorderen Drehpunkt 3 und dem Verbindungspunkt 4 etwa 10% der Profillänge c beträgt.

In Abb. 3 sind vorderes und hinteres Segment 1 bzw. 21 nicht über die Hebel 14, 15 miteinander gekoppelt, so daß die Auslenkung der beiden beweglichen Segmente unabhängig voneinander erfolgen kann. Dagegen fungieren bei der Abbildung 3 die Hebel 14 bzw. 15 als Verlängerungen des vorderen bzw. hinteren Segmentes 1 bzw. 21, so daß die Lagerstelle 3, 3' an das freie Ende dieser Hebel 14 bzw. 15 und damit weit ins Innere des mittleren Segmentes 11 hineinverlegt ist.

Bei gleichem Abstand der Lagerstellen 3, 3' voneinander in der Abb. 3 gegenüber der Abb. 2 ergibt sich somit eine größere axiale Länge des mittleren Segmentes 11 und damit eine größere Anlagefläche der Außenhaut 16 an diesem mittleren Segment 11 im Falle einer maximalen Auslenkung des vorderen und hinteren Segmentes 1 bzw. 21, wie die dünn gezeichnete, ausgelenkte Form in Abb. 3 zeigt.

Die Lagerstellen müssen nicht unbedingt auf der Skelettlinie, sondern können auch darunter, maximal an den eingezeichneten Lagerstellen 33, 33' liegen, aber nicht auf der Konkavseite der Skelettlinie in bezug auf die beabsichtigte Wölbung.

Dies dient einer optimal genauen Einhaltung der Profilform besonders auf der Saugseite, da auf dieser Seite die Außenhaut 16 lediglich in dem kleinen, freien Bereich 17 bzw. 18 zwischen vorderem, mittlerem und hinterem Segment 1, 11 bzw. 21 nicht an den Außenflächen dieser Segmente anliegt, sondern durch die Stabilität des Materials der Außenhaut 16 aufrechterhalten werden muß. Befindet sich der Flügel in seiner neutralen Mittellage, wie durch die schraffierte Stellung der Segmente in der Abb. 3 gezeichnet, so liegt die Außenhaut 16 dagegen über einen größeren Bereich nicht an der Oberseite des mittleren Segmentes 11 an. Lediglich aus diesem Grund sind Distanzhalter 6 quer zum Hebel 14 angeordnet, die die beiden Flächen der Außenhaut 16 im gewünschten Abstand zueinander zur Aufrechterhaltung der gewünschten Profildicke halten.

Die Profillänge c wird üblicherweise als der Abstand zwischen dem vordersten und hintersten Punkt des Profils definiert. Unter der Profildicke t versteht man den größten Abstand der beiden Flächen der Außenhaut 16 voneinander. Während im vorliegenden Fall die Profildicke t durch die dickste Stelle des mittleren Segmentes 21 vorgegeben und damit konstant bleibt, ändert sich die Profillänge c geringfügig, da sie sich bei Auslenkung eines der beweglichen Segmente 1 bzw. 21 aus der gestreckten Neutrallage geringfügig reduziert. Für die vorgegebene erfindungsgemäße Flügelkonstruktion sollte jedoch das Verhältnis der Profildicke t zur Profillänge c im Bereich von 0,095 liegen.

In Abb. 3 sind weiterhin die Hydraulikzylinder 5 zu erkennen, die an den einander gegenüberliegenden Enden des vorderen und mittleren bzw. mittleren und hinteren Segmentes angeordnet sind, und durch eine Betätigung eine Auslenkung des vorderen bzw. hinteren Segmentes 1 bzw. 21 ermöglichen.

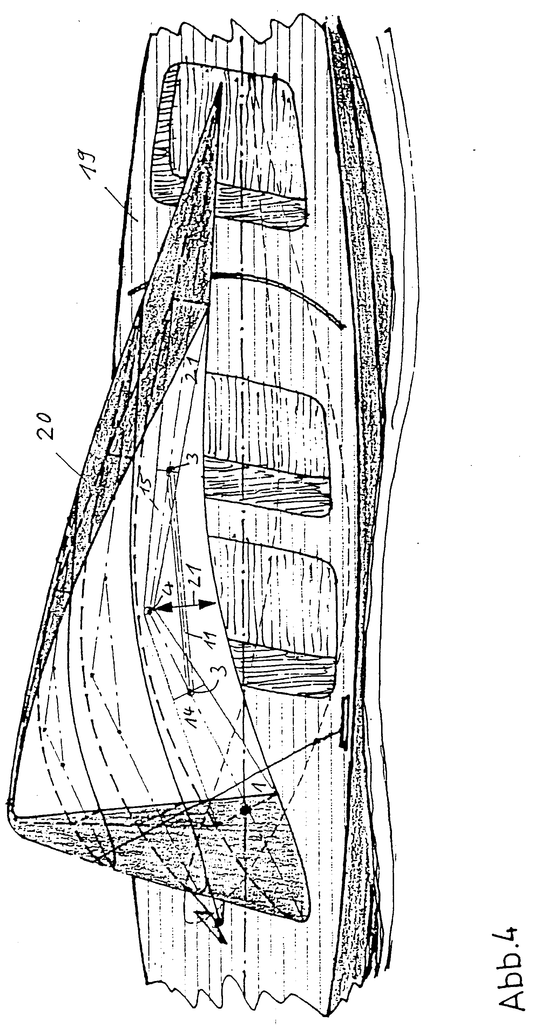

Abb. 4 zeigt eine perspektivische Aufsicht auf ein erfindungsgemäßes, teilweise freigeschnittenes Profil, das als Segel auf einem Segelboot montiert ist. Da bei diesem Anwendungsfall ein S-förmiges Profil nicht erforderlich ist, sondern nur eine jeweils gleichsinnige Auslenkung des vorderen und hinteren Segmentes 1 bzw. 21, sind diese wie in der Abb. 2 über die das vordere und hintere Segment 1 bzw. 21 verlängernden Hebels 14 bzw. 15 im Verbindungspunkt 4 miteinander gekoppelt. Dies bedingt selbstverständlich, daß das vordere und hintere Segment 1 bzw. 21 immer nur in einem festen Verhältnis der Auslenkungswinkel $\alpha$ bzw. $\alpha'$ zueinander bewegt werden können. Wie die Abb. 4 zeigt, besteht in diesem Fall das mittlere Segment 11 lediglich aus einer Strebe, deren Funktion in der Aufnahme der beiden Lagerstellen 3 für die beweglichen Segmente besteht. Weiterhin bestimmt die Stellung dieser Strebe, also des mittleren Segmentes 11 bezüglich des Bootskörpers 19 die grundsätzliche Stellung des als Segel 20 wirkenden Profils. Der Flügel ist selbstverständlich auf beiden Seiten vollständig von der Nase bis zur Hinterkante bespannt; die teilweise Öffnung ist nur für die Abbildung aus Gründen der Übersichtlichkeit vorgenommen.

Das Segel 20 der Abb. 4 kann damit also nicht nur hinsichtlich seiner Profilform, sondern auch hinsichtlich seiner gesamten Stellung bezüglich des Bootskörpers 19 während des Einsatzes verstellt und damit optimal auf die Windgegebenheiten abgestellt werden. Dadurch tritt eine Verbesserung des Vortriebes von etwa 15 bis 40% gegenüber herkömmlichen Mast-Segel-Ausführungen und von ca. 5 bis 15% gegenüber Profilmast-Segel-Ausführungen ein.

Bei einem solchen Einsatz als Segel ist wegen der begrenzten Masthöhe im Verhältnis zur Segelunterkante eine Abnahme der Profilgröße von der Unterkante des Segels zur Mastspitze hin gegeben. Das Profil wird dabei jedoch immer maßstabsgetreu verringert, so daß auch eine entsprechende Verringerung des Auslenkungsweges 21 zur Mastspitze hin erforderlich ist, um bei gleichbleibendem Verhältnis der Abstände zwischen dem Verbindungspunkt 4 und den Lagerstellen 3, 3' immer die gleichen Auslenkungswinkel a bzw. $\alpha'$ über die gesamte Höhe des Segels 20 zu erzielen.

Die Anwendung als Segel auf einem Segelboot bestimmt an sich noch nicht die Ausbildung der einzelnen Segmente, also etwa des vorderen, mittleren und hinteren Segmentes hinsichtlich ihrer Bauform. Hierfür kommen nach wie vor sowohl eine Holmbauweise, vorzugsweise in Form eines Kastenholmes, als auch eine ohne Verstärkung auskommende Schalenbauweise in Betracht.

Ebenso kann ein derart aufgebautes Profil, vorausgesetzt es handelt sich um eine Profilform, die in neutraler Mittellage symmetrisch ist, als Ruderblatt in einem Wasserfahrzeug Verwendung finden, da durch die hierdurch optimierten Strömungsverhältnisse am Ruder unter allen Einschlagwinkeln die Strömungsverhältnisse optimiert und damit die durch turbulente Strömung am Ruder auftretenden Verzögerungen

6

minimiert werden.

**Patentansprüche**

1. Veränderbares Tragflächen-Profil, das aus einem vorderen (1), einem mittleren (11) und einem hinteren (21) Segment, wobei das vordere (1) sowie das hintere (21) Segment um Achsen (y, y'), die senkrecht zur Skelettlinie (2) des Profils des Flügels verlaufen, schwenkbar sind, sowie aus einer aus ausreichend flexiblem, aber formhaltigem Material hergestellten Außenhaut (16) besteht,
**dadurch gekennzeichnet, daß**
   - die Achsen (y,y') im Bereich der Enden des mittleren Segmentes (11) liegen und als Lagerstellen (3,3') für das vordere (1) bzw. hintere (21) Segment am mittleren Segment dienen und
   - die Außenhaut (16) wenigstens mit der Nase (N) des vorderen Segmentes (1) fest verbunden ist und sowohl gegenüber den Außenflächen des mittleren (11) als auch gegenüber denen des hinteren Segmentes (21) verschiebbar ist.

2. Profil nach Anspruch 1,
**dadurch gekennzeichnet**, daß das
vordere und hintere Segment (1 bzw. 21) über Hebel (14, 15), die sich zum mittleren Bereich des mittleren Segmentes (11) hin erstrecken, an einem Verbindungspunkt (4) miteinander gekoppelt sind, so daß nur gegensinnige Auslenkungen des vorderen und hinteren Segmentes (1 bzw. 21) möglich sind.

3. Profil nach Anspruch 1 oder 2,
**dadurch gekennzeichnet**, daß das
vordere Segment (1) wenigstens in seinem vorderen Bereich und das hintere Segment (21) wenigstens in seinem hinteren Bereich eine Außenkontur besitzen, die der Kontur des gewünschten Profils in diesem Bereich entsprechen.

4. Profil nach Anspruch 1, 2 oder 3,
**dadurch gekennzeichnet**, daß das
mittlere Segment (11) wenigstens in seinem mittleren Bereich eine Außenkontur besitzt, die der Kontur des gewünschten Profils in diesem Bereich entspricht.

5. Profil nach einem der vorhergehenden Ansprüche,
**dadurch gekennzeichnet**, daß
wenigstens eines der Segmente (1, 11, 21) als Kastenholm ausgebildet ist.

6. Profil nach einem der vorhergehenden Ansprüche,
**dadurch gekennzeichnet**, daß in den
Bereichen, in denen die Außenkontur der einzelnen Segmente nicht der gewünschten Profilkontur entspricht, Distanzhalter (6) vorhanden sind, die quer zur Skelettlinie (2) verlaufen und mit ihren freien Enden drehbar an den Innenseiten der gegenüberliegenden Flächen der Außenhaut (16) befestigt sind.

7. Profil nach einem der Ansprüch 1 bis 6,
**dadurch gekennzeichnet**, daß zwischen
den Außenflächen der Segmente und den Innenflächen der Außenhaut Distanzhalter (7) vorhanden sind, die mit der Außenfläche des Segmentes fest verbunden sind und wobei das freie Ende des Distanzhalters (7) verschiebbar mit der Innenseite der Außenhaut verbunden ist.

8. Profil nach einem der vorhergehenden Ansprüche,
**dadurch gekennzeichnet**, daß das
Auslenken des vorderen und/oder hinteren Segmentes (1, 21) hydraulisch oder mechanisch geschieht.

9. Profil nach einem der vorhergehenden Ansprüche,
**dadurch gekennzeichnet**, daß das
Verhältnis der Profildicke (t) zur Profillänge (c) 0,095 beträgt.

EP 0 453 713 B1

**10.** Profil nach einem der vorhergehenden Ansprüche,
**dadurch gekennzeichnet**, daß das
Profil mit gekoppelten vorderen und hinteren Segmenten (1 bzw. 21) als Segel auf einem Segelboot verwendet wird.

**11.** Profil nach einem der Ansprüche 1 bis 9,
dadurch gekennzeichnet, daß das
mit einer in Neutralstellung symmetrischen Profilform als Steuerruder bei einem Wasserfahrzeug verwendet wird.

**12.** Profil nach einem der vorhergehenden Ansprüche,
**dadurch gekennzeichnet**, daß
das Verhältnis der Abstände der vorderen Lagerstelle (3) zum Verbindungspunkt (4) einerseits und der hinteren Lagerstelle (3') zum Verbindungspunkt (4) andererseits gleich dem Verhältnis der Abstände zwischen der Nase (N) und dem Verbindungspunkt einerseits und dem hinteren Ende (E) des Profils und dem Verbindungspunkt (4) andererseits ist und der Verbindungspunkt (4) im Bereich von etwa 40% der Profillänge (c), gemessen ab der Nase (N), liegt und vorderer sowie hinterer Drehpunkt (3 bzw. 3') bei etwa 30% und 55% der Profillänge (c) liegen.

**13.** Profil nach einem der, vorhergehenden Ansprüche,
**gekennzeichnet durch** einen Radius der
Nase des Profils von etwa einem Prozent der Profillänge (c) und folgenden Profildicken über die Profillänge (c):

    Bei 0 % von c: 0 x c
    bei 10% von c: 0,072 x c
    bei 20% von c: 0,091 x c
    bei 30% von c: 0,099 x c
    bei 40% von c: 0,097 x c
    bei 50% von c: 0,084 x c
    bei 60% von c: 0,069 x c
    bei 70% von c: 0,052 x c
    bei 80% von c: 0,034 x c
    bei 90% von c: 0,018 x c
    bei 100%von c: 0 x c

## Claims

**1.** Variable airfoil section comprising a front segment (1), a middle segment (11) and a rear segment (21), the front (1) and rear (21) segments being pivotable about axes (y, y') which extend perpendicularly to the mean camber line (2) of the airfoil section, and an outer skin (16) made from a sufficiently flexible yet rigid material, characterised in that
  - the axes (y, y') are located in the vicinity of the ends of the middle segment (11) and act as pivot points (3, 3') for the front (1) and rear (21) segments on the middle segment and
  - the outer skin (16) is fixedly attached at least to the nose (N) of the front segment (1) and is displaceable relative to the outer surfaces of both the central segment (11) and the rear segment (21).

**2.** Section according to claim 1, characterised in that the front and rear segments (1 and 21) are coupled to one another, via levers (14, 15) extending towards the central part of the middle segment (11), at a connection point (4) in such a way that it is only possible for the front and rear segments (1 and 21) to be deflected in opposite directions.

**3.** Section according to claim 1 or 2, characterised in that the front segment (1) has an outer contour, at least in its front region, and the rear segment (21) has an outer contour, at least in its rear region, corresponding to the contour of the desired section in this area.

**4.** Section according to claim 1, 2 or 3, characterised in that the middle segment (11) has, at least in its central part, an outer contour corresponding to the contour of the desired section in this area.

8

5. Section according to one of the preceding claims, characterised in that at least one of the segments (1, 11, 21) is constructed as a box spar.

6. Section according to one of the preceding claims, characterised in that, in the regions where the outer contour of the individual segments does not correspond to the desired section contour, spacers (6) are provided which extend at right angles to the mean camber line (2) and are rotatably fixed, by their free ends, to the insides of the opposing surfaces of the outer skin (16).

7. Section according to one of claims 1 to 6, characterised in that, between the outer surfaces of the segments and the inner surfaces of the outer skin, spacers (7) are provided which are fixedly connected to the outer surface of the segment, the free end of the spacer (7) being displaceably connected to the inside of the outer skin.

8. Section according to one of the preceding claims, characterised in that the deflection of the front and/or rear segment (1, 21) is effected hydraulically or mechanically.

9. Section according to one of the preceding claims, characterised in that the ratio of the thickness (t) of the section to the length (c) of the section is 0.095.

10. Section according to one of the preceding claims, characterised in that the section with the front and rear segments (1 and 21) coupled together is used as a sail on a sailing boat.

11. Profile according to one of claims 1 to 9, characterised in that the section which is symmetrical in the neutral position is used as the rudder of a vessel.

12. Section according to one of the preceding claims, characterised in that the ratio of the spacings of the front pivot point (3) from the connecting point (4), on the one hand, and of the rear pivot point (3') to the connecting point (4), on the other hand, is equal to the ratio of the spacings between the nose (N) and the connecting point, on the one hand, and the rear end (E) of the section and the connecting point (4), on the other hand, and the connecting point (4) is situated in the region of about 40% of the length (c) of the section, measured from the nose (N), and the front and rear centres of rotation (3 and 3') are situated at about 30% and 55% of the length (c) of the section.

13. Section according to one of the preceding claims, characterised by a radius of the nose of the section of about 1% of the length (c) of the section and the following section thicknesses over the section length (c):
    at 0 % of c: $0 \times c$
    at 10% of c: $0.072 \times c$
    at 20% of c: $0.091 \times c$
    at 30% of c: $0.099 \times c$
    at 40% of c: $0.097 \times c$
    at 50% of c: $0.084 \times c$
    at 60% of c: $0.069 \times c$
    at 70% of c: $0.052 \times c$
    at 80% of c: $0.034 \times c$
    at 90% of c: $0.018 \times c$
    at 100% of c: $0 \times c$

**Revendications**

1. Profil variable pour surface portante, composé d'un segment avant (1), d'un segment central (11) et d'un segment arrière (21), le segment avant (1) et le segment arrière (21) pouvant pivoter autour d'axes (y, y') qui s'étendent perpendiculairement à la ligne d'ossature (2) du profil de l'aile, ainsi que d'un revêtement extérieur (16), fabriqué en une matière suffisamment flexible mais capable de conserver sa forme,
   caractérisé en ce que
      - les axes (y, y') sont situés dans la région des extrémités du segment central (11) et servent respectivement d'articulations (3, 3') sur le segment central pour le segment avant (1) et le

9

segment arrière (21), et

- le revêtement extérieur (16) est relié rigidement, au moins au nez (N) du segment avant (1) et peut se déplacer en translation aussi bien par rapport aux surfaces extérieures du segment central (11) que par rapport à celles du segment arrière (21).

2. Profil selon la revendication 1,
caractérisé en ce que le segment avant et le segment arrière (1 et 21 respectivement) sont accouplés l'un à l'autre, au droit d'un point de jonction (4) par l'intermédiaire de leviers (14, 15) qui s'étendent en direction de la région centrale du segment central (11), de sorte que seules sont possibles des excursions inverses l'une de l'autre des segments avant et arrière (1 et 21 respectivement).

3. Profil selon la revendication 1 ou 2,
caractérisé en ce que le segment avant (1), du moins dans sa région avant, et le segment arrière ((21), du moins dans sa région arrière, possèdent un contour extérieur qui correspond au contour du profit qu'on souhaite obtenir dans cette région.

4. Profil selon la revendication 1, 2 ou 3,
caractérisé en ce que le segment central (11), du moins dans sa région centrale, possède un contour extérieur qui correspond au contour du profit qu'on veut obtenir dans cette région.

5. Profil selon une des revendications précédentes,
caractérisé en ce qu'au moins un des segments (1, 11, 21) est constitué par un longeron en caisson.

6. Profil selon une des revendications précédentes,
caractérisé en ce que, dans les régions où le contour extérieur des segments individuels ne correspond pas au contour à obtenir dans le profil, sont prévues des entretoises (6) qui s'étendent transversalement à la ligne d'ossature (2) et dont les extrémités extérieures sont fixées de façon articulée à la face interne des surfaces opposées du revêtement extérieur (16).

7. Profil selon une des revendications 1 à 6,
caractérisé en ce qu'entre les surfaces extérieures des segments et la surfaces intérieures du revêtement extérieur, sont prévues des entretoises (7) qui sont reliées rigidement à la surface extérieure du segment, l'extrémité libre de l'entretoise (7) étant assemblée mobile en coulissement à la face interne du revêtement extérieur.

8. Profil selon une des revendications précédentes,
caractérisé en ce que l'excursion du segment avant et/ou du segment arrière (1, 21) est commandée hydrauliquement ou mécaniquement.

9. Profil selon une des revendications précédentes,
caractérisé en ce que le rapport de l'épaisseur (t) du profil à la longueur (c) du profil est de 0,095.

10. Profil selon une des revendications précédentes,
caractérisé en ce que le profil est utilisé comme voile pour un bateau à voile, avec les segments avant et arrière (1 et 21 respectivement) accouplés.

11. Profil selon une des revendications 1 à 9,
caractérisé en ce qu'on utilise la forme de profil, symétrique en position neutre, comme gouvernail de direction dans un véhicule nautique.

12. Profil selon une des revendications précédentes,
caractérisé en ce que le rapport des distances de l'articutation avant (3) au point de jonction (4), d'une part, et de l'articulation arrière (3') au point de jonction (4), d'autre part, est égal au rapport des distances du nez (N) au point de jonction, d'une part, et de l'extrémité arrière (E) du profil au point de jonction (4), d'autre part, et le point de jonction (4) se trouve dans la région d'environ 40 % de la longueur (c) du profil, mesurée à partir du nez (N), et le point d'articulation avant et le point d'articulation arrière (3 et 3' respectivement) se trouvent à environ 30 % et 55 % de la longueur (c) du profil.

**13.** Profil selon une des revendications précédentes,
caractérisé en ce que le rayon du nez du profil est d'environ 1 % de la longueur (c) du profil et les épaisseurs du profil sur la longueur (c) du profil ont les valeurs suivantes :
à 0 % de c : 0 x c
à 10 % de c : 0,072 x c
à 20 % de c : 0,091 x c
à 30 % de c : 0,099 x c
à 40 % de c : 0,097 x c
à 50 % de c : 0,084 x c
à 60 % de c : 0,069 x c
à 70 % de c : 0,052 x c
à 80 % de c : 0,034 x c
à 90 % de c : 0,018 x c
à 100 % de c : 0 x c

Abb.1

Abb.2

Abb.3

Abb.4